Europäisches Patentamt

European Patent Office

Office européen des brevets

(11) Veröffentlichungsnummer: **0 505 837 A1**

## (12) EUROPÄISCHE PATENTANMELDUNG

(21) Anmeldenummer: **92104239.6**

(51) Int. Cl.5: **A22C 17/04**

(22) Anmeldetag: **12.03.92**

(30) Priorität: **23.03.91 DE 4109699**

(43) Veröffentlichungstag der Anmeldung:
**30.09.92 Patentblatt 92/40**

(84) Benannte Vertragsstaaten:
**BE DE DK ES FR GB**

(71) Anmelder: **NORDISCHER MASCHINENBAU RUD. BAADER GMBH + CO KG**
Geniner Strasse 249
W-2400 Lübeck(DE)

(72) Erfinder: **Schulte, Josef**
**Buchenweg 30**
**W-2401 Hamberge(DE)**
Erfinder: **Wodrich, Günter**
**Birkenweg 7**
**W-2401 Klempau(DE)**

(54) **Verfahren zum Entbeinen von Geflügelschenkeln und Einrichtung zur Durchführung des Verfahrens.**

(57) Es ist ein Verfahren zum Gewinnen des Schenkelfleisches von Geflügelunterschenkeln und eine Einrichtung zur Durchführung des Verfahrens beschrieben. Ausgehend von einer Einrichtung, bei der nach Anbringen eines Rundumschnittes im Bereich des distalen Gelenkkopfes (41) und dadurch Trennen der Sehnen, Häute und Bänder, der Schenkelknochen (44) unter Rückhalten des Schenkelfleisches mittels einer Abstreifblende gezogen wird, wird eine Einrichtung beschrieben, bei der ein Paar Greifelemente (17 und 18) vorgesehen sind, welche in eine den Schenkelknochen (44) umgreifende Stellung bringbar und je in dem umschließenden Bereich mit einer Aussparung (20) versehen sind, die gegenüber der Position des Schenkelknochens (44) seitlich versetzt ausgerichtet ist, und bei welcher Einrichtung eine Trenneinrichtung (16) in die Greifelemente (17 und 18) integriert ist, deren Schneidmechanismus unmittelbar neben der Aussparung (20) wirksam ist. Ziel ist es, einen Trennschnitt zu führen, der die Sehne (47), die das Wadenbein (46) distalwärts fortsetzt, ungetrennt beläßt mit dem Effekt, daß mit dem Schenkelknochen (44) auch das Wadenbein (46) gezogen wird.

Fig. 2

EP 0 505 837 A1

Die Erfindung betrifft ein Verfahren zum Gewinnen des Schenkelfleisches von Geflügelschenkeln, wobei längs des Schenkelknochens verlaufende Sehnen und Bänder in dessen distalem Endbereich getrennt werden und anschließend das Fleisch durch zum proximalen Ende des Schenkelknochens hin gerichtete Relativbewegung zwischen Knochen und Fleisch abgestreift wird und eine Vorrichtung zur Durchführung des Verfahrens. Diese umfaßt eine den Schenkelknochen im Bereich seines distalen Gelenkkopfes erfassende Zange und eine denselben proximalwärts neben der Zange umfassenden und in Längsrichtung des Schenkelknochens im Sinne einer Abstandsveränderung gegenüber der Zange verlagerbare Haltevorrichtung, sowie eine Trenneinrichtung zum Durchtrennen von Sehnen und Bändern in der Nähe der Ansatzstelle der Zange.

Beim Entbeinen von Geflügelschenkeln durch Ziehen des Schenkelknochens kommt es darauf an, daß das Schenkelfleisch bei hoher Ausbeute als optisch ansprechendes Stück gewonnen wird. Dabei ist die optische Qualität umso eher erreichbar, je weniger das Fleisch beim Ziehen des Schenkelknochens strapaziert wird. Der Grad der Strapazierung hängt dabei davon ab, inwieweit die Tendenz unterbunden werden kann, daß Fleischteile aufgrund ihrer Haftung an dem Schenkelknochen mit diesem mitgezogen, d. h. Fleischteile aus dem Schenkelfleisch herausgerissen werden.

Es ist bekannt, daß diese Tendenz reduzierbar ist, wenn die die besagten Fleischteile durchziehenden Sehnen und Bänder vor dem Ziehen des Schenkelknochens in dessen distalem Endbereich getrennt werden. Dies geschieht z. B. entsprechend der DE 32 27 430 C2 dadurch, daß die in einer Knochengreifvorrichtung durch Erfassen des Schenkelknochens am distalen Ende desselben eingespannte Geflügelkeule unmittelbar neben der Einspannstelle mittels einer Einkerbvorrichtung mit einer Umfangskerbe versehen wird, bei deren Erzeugung die in diesem Bereich verlaufenden Sehnen und Bänder getrennt werden. Alsdann wird mittels einer die Geflügelkeule proximalwärts neben der Umfangskerbe umfassenden Stützbackenanordnung das Schenkelfleisch zurückgehalten und durch Entfernen der Knochengreifvorrichtung von der Stützbackenanordnung in Längsrichtung des Schenkelknochens das Schenkelfleisch abgestreift.

Handelt es sich bei den zu bearbeitenden Geflügelkeulen um Unterschenkel, dann zeigt sich bei dieser Vorgehensweise, daß das einen distalwärts nadelförmig zulaufenden Knochen bildende Wadenbein verhältnismäßig oft mit dem Schenkelfleisch von dem Schenkelknochen gelöst wird, d. h. im Schenkelfleisch verbleibt. Das hat zusätzlich zu erbringende Trimmarbeit zur Folge und ist daher auch vom Kostenstandpunkt her nicht akzeptabel.

Aus der EP 402 647 ist eine Einrichtung zum Bearbeiten von Knochen enthaltenden Extremitäten von Geflügel bekannt. Das Ausgangsprodukt ist die aus Ober- und Unterschenkel bestehende Doppelkeule mit Kniegelenk. Bei dieser Einrichtung werden der Unterschenkel an seinem distalen Ende und der Oberschenkel an seinem proximalen Ende durch Einbringen in mit Aufnahmeschlitzen versehene Halteelemente gehaltert, in der Nähe der Einspannstelle des besagten distalen Endes ein Einschnitt um den Unterschenkelknochen herum erzeugt, das Kniegelenk ausgestanzt und schließlich die Knochen durch Erfassen an den Gelenkköpfen unter Rückhalten des Fleisches gezogen.

Auch mit dieser Einrichtung ist nicht sicherstellbar, daß das Wadenbein mit dem Unterschenkelknochen aus dem Schenkelfleisch entfernt wird.

Es ist daher die Aufgabe der Erfindung ein Verfahren anzugeben, welches ermöglicht, Geflügelunterschenkel in einer Weise zu entbeinen, daß das Schenkelfleisch sicher knochenfrei und als qualitativ ansprechendes Stück unter hoher Ausbeute gewonnen wird.

Diese Aufgabe wird erfindungsgemäß durch ein Verfahren der vorstehend beschriebenen Art gelöst, welches dadurch gekennzeichnet ist, daß der Trennschnitt im distalen Endbereich des Unterschenkelknochens erfolgt, ohne daß die das Wadenbein distalwärts fortsetzende Sehne getrennt wird. Zu diesem Zweck kann vorteilhaft so vorgegangen werden, daß die zu trennenden Sehnen und Bänder an einer Seite des Unterschenkelknochens versammelt und anschließend durchgetrennt werden.

Zur Durchführung dieses Verfahrens eignet sich eine Einrichtung, deren kennzeichnende Merkmale darin bestehen, daß die Zange ein Paar Greifelemente umfaßt, deren Aussparungen zum Erfassen des Schenkelknochens sich senkrecht zur Ebene erstrecken, in der sich die beiden Greifarme bewegen, und ein Schneidmechanismus unmittelbar an der Zange angebracht ist. Als Schneidmechanismus hat sich dabei eine mit einer Stirnschneide versehene Messerklinge bewährt, die unmittelbar neben dem in der Haltevorrichtung gehaltenen Schenkelknochen und im wesentlichen quer zu diesem vorschiebbar ist, so daß die Stirnschneide die Bahn des Schenkelknochens kreuzt.

Um zu verhindern, daß die zu trennenden Sehnen und Bänder während des Schneidvorganges aus dem Schneidbereich der Messerklinge gedrängt werden, kann die Stirnseite derselben in dem dem Schenkelknochen nächstliegenden Bereich voreilend ausgebildet sein.

Eine besonders einfache Ausführung ergibt sich, wenn die Trenneinrichtung in die Zange zum Erfassen des Schenkelknochens integriert ist, d. h. wenn eines der Greifelemente mit einem unmittelbar an dessen Aussparung angrenzenden Führungsschlitz für die Messerklinge und das andere Greifelement mit einem Eintauchschlitz für die Messerklinge versehen sind.

Die Erfindung wird nachstehend anhand eines in der Zeichnung dargestellten Ausführungsbeispiels näher erläutert. Es zeigen

Fig. 1        eine Aufnahme für die zu bearbeitenden Geflügelschenkel in axonometrischer Darstellung,

Fig. 2        eine Seitenansicht einer industriell einsetzbaren Einrichtung in vereinfachter Darstellung,

Fig. 3a       eine Seitenansicht der erfindungsgemäßen Einrichtung mit in einem angedeuteten Halteelement eines Abstreifmechanismus' fixierten Geflügelunterschenkel und geöffneter Trenneinrichtung zum Durchtrennen der Sehnen und Bänder,

Fig. 3b       eine Seitenansicht der Einrichtung nach Fig. 3a,

Fig. 4a       eine Seitenansicht der Einrichtung nach Fig. 3a mit um den Unterschenkelknochen geschlossener Trenneinrichtung,

Fig. 4b       eine Seitenansicht der Einrichtung nach Fig. 4a,

Fig. 5a       eine Seitenansicht der Einrichtung nach Fig. 3a mit betätigter Trenneinrichtung,

Fig. 5b       eine Seitenansicht der Einrichtung nach Fig. 5a

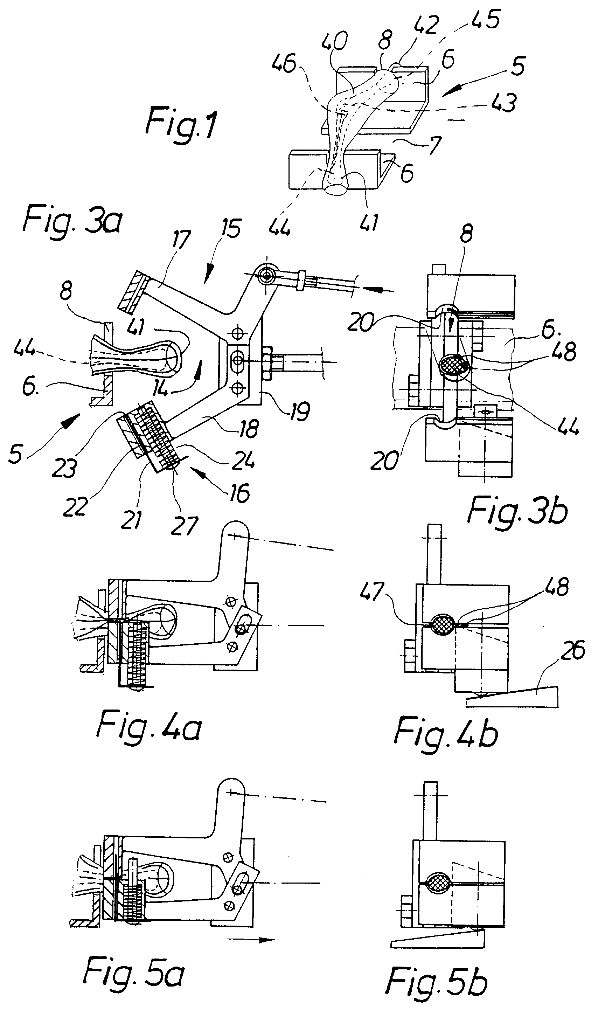

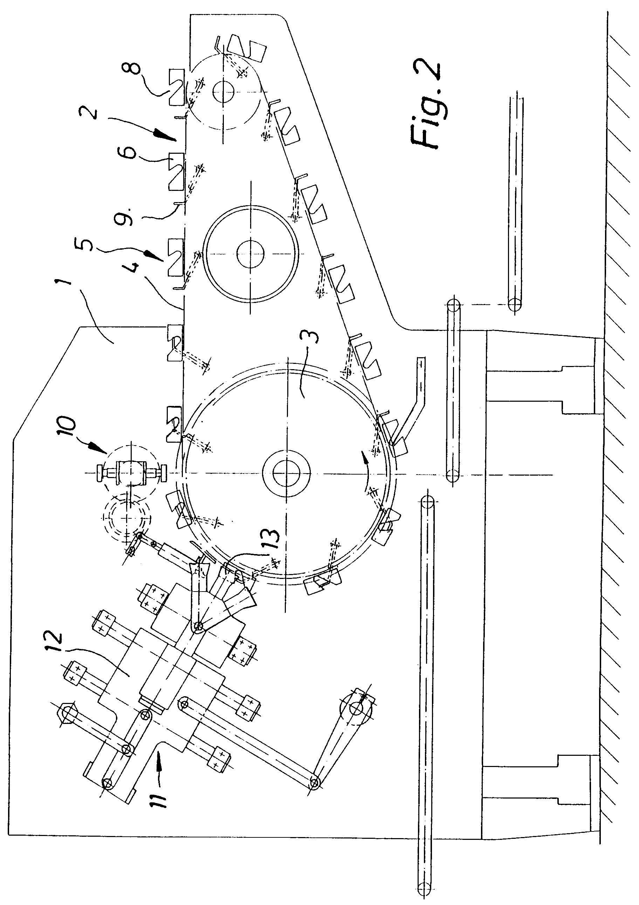

Die erfindungsgemäße Einrichtung ist vorzugsweise als Bearbeitungsstation in einer Entbeineinrichtung nach der EP 402 447 eingebaut. Gemäß Fig. 2 ist die Entbeineinrichtung in einem portalartigen Gestell 1 untergebracht, dessen dem Betrachter zugekehrte Portalhälfte aus Gründen der besseren Einsichtnahme in die Anordnung der Bearbeitungswerkzeuge entfernt ist. Diese sind im wesentlichen im Bereich der Peripherie eines Umlenkrades 3 eines Förderers 2 installiert, der im übrigen aus zwei parallel zueinander, synchron umlaufend angetriebenen, endlosen Fördergurten 4 besteht. Der Förderer 2 ist mit Haltevorrichtungen 5 bestückt, die unter gleicher Teilung angeordnet sind. Jede Haltevorrichtung 5 setzt sich aus zwei Halteelementen 6 zusammen, die sich spiegelbildlich unter Belassen eines Zwischenraumes 7 einander gegenüberstehen, was dadurch erreicht wird, daß die linken und die rechten Halteelemente 6 jeweils einem der Fördergurte 4 zugeordnet sind. Jedes Halteelement 6 ist als Stützsteg ausgebildet und mit einer Öffnung 8 in Form einer offenen Aussparung für die Halterung der zu bearbeitenden Schenkel 40 im Bereich der außenliegenden Gelenkköpfe 41, 42 versehen.

Die Anordnung der Halteelemente 6 ist so getroffen, daß der in den Öffnungen 8 eingelegte Schenkel 40 quer zu seiner Längsachse gefördert wird. Jeder Haltevorrichtung 5 ist ein Niederhalter 9 zugeordnet, der in geeigneter Weise im Förderverlauf so steuerbar ist, daß der Schenkel 40 in den Halteelementen 6 niedergehalten wird. So vorbereitet passieren die Schenkel einen Ausrichter 10 , welcher das Mittelgelenk 43 in eine Lage bringt, die das anschließende Ausstanzen desselben ermöglicht. Dazu ist eine an einem Schlitten 12 montierte Stanzvorrichtung 11 mit einem Hohlstempel 13 vorgesehen, die durch ein nicht gezeigtes Kurvengetriebe gesteuert über einen gewissen Weg eine zu der Fortschrittsgeschwindigkeit des Förderers 2 synchrone Begleitbewegung ausführt. Der Stanzvorgang wird während des Mitlaufs des Schlittens 12 mit einer Haltevorrichtung 5 durch Verfahren des Hohlstempels 13 gegen den Förderer 2 durchgeführt.

Den Halteelementen 6 sind im Bereich des Umlenkrades 3 jeweils Einrichtungen 14 zum Ziehen der Schenkelknochen 44 und 45 zugeordnet. Sie begleiten die Haltevorrichtungen 5 während ihres Umlaufes um das Umlenkrad 3 und werden dabei in geeigneter Weise gesteuert. Die folgende Beschreibung einer solchen Einrichtung 14 bezieht sich auf eine derjenigen, die dem den Schenkel 40 im Bereich seines distalen Endes haltenden Halteelement 6 seitlich gegenüberstehen. Jede dieser Einrichtungen 14 umfaßt gemäß Figuren 3, 4 und 5 ein kombiniertes Werkzeug, bestehend aus einer Zange 15 und einer Trenneinrichtung 16 mit einem Schneidmechanismus. Die Zange 15 wird durch ein Paar Greifelemente 17 und 18 gebildet, die synchron gegenläufig schwenkbar an einem Schieber 19 befestigt sind, der auf geeignete Weise, vorzugsweise kurvengesteuert, in Richtung der Längsachse des zu bearbeitenden Schenkels 40 bewegbar ist. Der Antrieb der Greifelemente 17 und 18 kann ebenfalls kurvengesteuert erfolgen und ist wie der Antrieb des Schiebers 19 nicht näher dargestellt. Die Greifelemente 17 und 18 weisen in ihrem den Schenkelknochen 44 umschließenden Teil jeweils eine Aussparung 20 auf, deren jede im wesentlichen die Gestalt des halben Querschnitts des Schenkelknochens 44 in seinem distalen Endbereich hat. In Öffnungsstellung der Greifelemente 17 und 18 sind die Aussparungen 20 , wie aus Fig. 3b erkennbar, gegenüber der durch die Anordnung der Öffnung 8 in dem zugeordneten Halteelement 6 bestimmten Position des Schenkelknochens 44 um etwa ein Drittel der Dickendimension desselben an der Greifstelle seitlich versetzt ausgerichtet.

Die Trenneinrichtung 16 umfaßt gemäß Figuren 3, 4 und 5 eine Messerklinge 21 , die in einem Führungsschlitz 22 in dem Greifelement 18 geführt ist. Dabei grenzt der Führungsschlitz 22 unmittelbar an die Aussparung 20 in dem Greifelement 18 an. Die Messerklinge 21 hat eine abgeschrägte Stirnschneide 23 und ist in den Führungsschlitz 22 so eingesetzt, daß sich eine voreilende Spitze unmittelbar neben der Aussparung 20 ergibt. Die Messerklinge 21 wird durch einen Federmechanismus 24 unbetätigt in einer Stellung gehalten, in der die Stirnschneide 23 vollständig innerhalb des Greifelementes 18 gelegen ist. Das andere Greifelement 17 weist einen in Schließstellung der Greifelemente 17 und 18 mit dem Führungsschlitz 22 fluchtenden Eintauchschlitz 25 für die Messerklinge 21 auf. Die Betätigung der Messerklinge 21 erfolgt durch eine Steuerkurve 26 , die stationär neben dem Umlenkrad 3 angeordnet ist, und auf die ein mit der Messerklinge 21 in Verbindung stehender Stößel 27 während des Förderfortschritts aufläuft.

Die Wirkungsweise der Einrichtung wird nachstehend unter Verfolgung des Bearbeitungszyklus' an einem zu entbeinenden Schenkel 40 beschrieben: Der zu bearbeitende Schenkel 40 wird durch Einführen des distalen und proximalen Endteils in die Öffnungen 8 der beiden Halteelemente 6 einer Haltevorrichtung 5 eingelegt und zwar so, daß die Gelenkköpfe 41 und 42 seitlich über die Halteelemente 6 hinausragen und die Beugeebene des Schenkels 40 parallel zur Förderrichtung verläuft und dabei das Mittelgelenk 43 vorausläuft. Im Verlauf der Förderung wird der Schenkel 40 zunächst durch einen diesen übergreifenden Niederhalter 9 niedergehalten, dann durch einen Ausrichter bezüglich der Lage seines Mittelgelenkes 43 ausgerichtet und in dieser Lage durch Nachsteuern des Niederhalters 9 fixiert der Stanzvorrichtung 11 zugeführt, die das Mittelgelenk 43 mit ihrem Hohlstempel 13 ausstanzt. Während des Umlaufs der Haltevorrichtung 5 um die Peripherie des Umlenkrades 3 haben sich der Haltevorrichtung 5 seitlich Einrichtungen 14 zum Ziehen der Schenkelknochen 44 und 45 zugesellt, deren dem distalen Ende des Schenkels 40 zugeordnete Einrichtung nachstehend weiterverfolgt wird. Die Greifelemente 17 und 18 dieser Einrichtung 14 werden im Förderfortschritt in eine den aus dem Halteelement 6 hervorstehenden Gelenkkopf 41 erfassende Stellung gebracht, wobei sich die Zugriffstelle unmittelbar neben dem Halteelement 6 befindet. Aufgrund der gegenüber der Lage des Schenkels 40 versetzten Ausrichtung der Aussparungen 20 der Greifelemente 17 und 18 wird der Schenkelknochen 44 während des Schließvorganges der Greifelemente 17 und 18 in die Aussparungen 20 gezwungen, bei welchem Vorgang die den Schenkelknochen 44 auf der nachlaufenden Seite umgebenden Fleischteile und Sehnen 48 in den Trennspalt zwischen den Greifelementen 17 und 18 gedrängt werden. In diesem Haltezustand gelangt die in dem Greifelement 18 geführte Messerklinge 21 mit ihrem Stößel 27 in den Bereich einer Steuerkurve 26 , die die Messerklinge 21 in ihrem Führungsschlitz 22 gegen den Federmechanismus 24 vorschiebt. Dabei kreuzt deren Stirnschneide 23 den Trennspalt zwischen den Greifelementen 17 und 18 und taucht in den Eintauchschlitz 25 in dem Greifelement 17 ein. Dabei werden die an der nachlaufenden Seite des Schenkelknochens 44 versammelten Sehnen 48 sowie Häute und Bänder getrennt, wobei die Abschrägung der Stirnschneide 23 bewirkt, daß ein ziehender Schnitt von dem Schenkelknochen 44 weg entsteht. Danach wird die durch die Greifelemente 17 und 18 gebildete Zange 15 in geschlossenem Zustand im Sinne einer wachsenden Distanz zu dem zugeordneten Halteelemente 6 verfahren und damit der Schenkelknochen 44 aus dem Schenkelfleisch herausgezogen, das durch die Blendenwirkung der Öffnung 8 in dem Halteelement 6 zurückgehalten wird. Die unbeschädigt gebliebene Sehne 47 des Wadenbeins 46 bewirkt dabei, daß das letztere gemeinsam mit dem Schenkelknochen 44 aus dem Schenkelfleisch entfernt wird.

## Bezugszeichenliste

| | | | |
|---|---|---|---|
| 1 | Gestell | 40 | Schenkel |
| 2 | Förderer | 41 | Gelenkkopf |
| 3 | Umlenkrad | 42 | "            " |
| 4 | Fördergurt | 43 | Mittelgelenk (Knie-) |
| 5 | Haltevorrichtung | 44 | Schenkelknochen |
| 6 | Halteelement | 45 | "               " |
| 7 | Zwischenraum | 46 | Wadenbein |
| 8 | Öffnung | 47 | Sehne des Wadenbeins |
| 9 | Niederhalter | 48 | Sehne |
| 10 | Ausrichter | | |
| 11 | Stanzvorrichtung | | |
| 12 | Schlitten | | |
| 13 | Hohlstempel | | |
| 14 | Einrichtung zum Ziehen d. Schenkelknochen | | |
| 15 | Zange | | |
| 16 | Trenneinrichtung | | |
| 17 | Greifelement | | |
| 18 | "            " | | |
| 19 | Schieber | | |
| 20 | Aussparung | | |
| 21 | Messerklinge | | |
| 22 | Führungsschlitz | | |
| 23 | Stirnschneide | | |
| 24 | Federmechanismus | | |
| 25 | Eintauchschlitz | | |
| 26 | Steuerkurve | | |
| 27 | Stößel | | |

## Patentansprüche

1. Verfahren zum Gewinnen des Schenkelfleisches von Geflügelschenkeln, wobei längs des Schenkelknochens verlaufende Sehnen und Bänder in dessen distalem Endbereich getrennt werden und anschließend das Fleisch durch zum proximalen Ende des Schenkelknochens (44) hin gerichtete Relativbewegung zwischen Knochen und Fleisch abgestreift wird, **dadurch gekennzeichnet,** daß der Trennschnitt erfolgt, ohne daß die das Wadenbein (46) distalwärts fortsetzende Sehne getrennt wird.

2. Verfahren nach Anspruch 1 , **dadurch gekennzeichnet,** daß die zu trennenden Sehnen und Bänder an einer Seite des Unterschenkelknochens versammelt und anschließend durchgetrennt werden.

3. Einrichtung zur Durchführung des Verfahrens nach Anspruch 1 oder 2 , mit einer den Schenkelknochen (44) im Bereich seines distalen Gelenkkopfes (41) erfassenden Zange (15) und einer denselben proximalwärts neben der Zange (15) umfassenden und in Längsrichtung des Schenkelknochens (44) im Sinne einer Abstandsveränderung gegenüber der Zange (15) verlagerbaren Haltevorrichtung (5) , sowie mit einer Trenneinrichtung (16) zum Durchtrennen von Sehnen und Bändern in der Nähe der Ansatzstelle der Zange (15) , **dadurch gekennzeichnet,** daß die Zange (15) ein paar Greifelemente (17 und 18) umfaßt , deren Aussparungen zum Erfassen des Schenkelknochens sich senkrecht zur Ebene erstrecken, in der sich die beiden Greifelemente bewegen, und ein Schneidmechanismus unmittelbar an der Zange angebracht ist.

4. Einrichtung nach Anspruch 3 , **dadurch gekennzeichnet,** daß der Schneidmechanismus der Trenneinrichtung (16) eine mit einer Stirnschneide (23) versehene Messerklinge (21) umfaßt, welche unmittelbar neben dem in der Haltevorrichtung (5) gehaltenen Schenkelknochen (44) und im wesentlichen quer zu diesem vorschiebbar ist, so daß die Stirnschneide (23) die Bahn des Schenkelknochens (44) kreuzt.

5. Einrichtung nach Anspruch 3 oder 4 , **dadurch gekennzeichnet,** daß die Stirnschneide (23) der Messerklinge (21) in dem dem Schenkelknochen (44) nächstliegenden Bereich voreilend ausgebildet ist.

6. Einrichtung nach einem der Ansprüche 3 bis 5 , **dadurch gekennzeichnet,** daß die Trenneinrichtung (16) in die Zange (15) integriert ist, wobei eines der Greifelemente (17 oder 18) mit einem unmittelbar an dessen Aussparung (20) angrenzenden Führungsschlitz (22) für die Messerklinge (21) und das andere Greifelement (17 bzw. 18) mit einem Eintauchschlitz (25) für die Messerklinge (21) versehen sind.

Fig.1

Fig. 3a

Fig.3b

Fig. 4a

Fig.4b

Fig. 5a

Fig.5b

*Fig. 2*

EP 0 505 837 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | EP-A-0 402 647 (BAADER) <br> * Spalte 4, Zeile 6 - Spalte 5, Zeile 4 * <br> * Spalte 6, Zeile 31 - Zeile 51 * <br> --- | 1,3 | A22C17/04 |
| D,A | DE-A-3 227 430 (ADKINSON) <br> --- | | |
| A | EP-A-0 278 122 (MEYN) <br> --- | | |
| A | DE-A-2 047 772 (SCHAECHTER) <br> --- | | |
| A | US-A-4 041 572 (MARTIN) <br> ----- | | |
| | | | **RECHERCHIERTE SACHGEBIETE (Int. Cl.5)** <br><br> A22C |

Der vorliegende Recherchenbericht wurde für alle Patentansprüche erstellt

| Recherchenort | Abschlußdatum der Recherche | Prüfer |
|---|---|---|
| DEN HAAG | 10 JUNI 1992 | DE LAMEILLIEURE D. |